# EUROPEAN PATENT SPECIFICATION

(11) **EP 2 387 500 B1**
(45) Date of publication and mention of the grant of the patent: **05.06.2013**
(21) Application number: 08875780.2
(22) Date of filing: 17.12.2008
(51) Int. Cl.: B29D 30/20

(54) **PROCESS AND PLANT FOR BUILDING GREEN TYRES FOR VEHICLE WHEELS**
VERFAHREN UND ANLAGE ZUM BAU VON REIFENROHLINGEN FÜR FAHRZEUGRÄDER
PROCESSUS ET INSTALLATION DE FABRICATION DE PNEUS CRUS DESTINÉS À DES ROUES DE VÉHICULE

(43) Date of publication of application: 23.11.2011
(73) Proprietor: Pirelli Tyre S.P.A., 20126 Milan (IT)
(72) Inventor: D'AMBROSIO, Andrea, I-20126 Milano (IT); MARCHINI, Maurizio, I-20126 Milano (IT); CRIPPA, Pierluigi, I-20126 Milano (IT); MANCINI, Gianni, I-20126 Milano (IT)
(74) Representative: Castiglia, Paolo
(86) International application number: PCT/IB2008/003514
(87) International publication number: WO 2010/070374

(56) References cited:
- EP-A- 0 776 756
- EP-A- 1 570 978
- WO-A-01/89818
- WO-A-2004/041520
- WO-A-2006/033120
- DE-A1-102005 055 609

## Description

The present invention relates to a process for building tyres for vehicle wheels.

The present invention also relates to a plant for building green tyres for vehicle wheels, usable for carrying out the above mentioned process.

Tyre production cycles comprise a building process, wherein the various components of the tyre itself are made and/or assembled in one or more building lines, and subsequently a moulding and vulcanization process is carried out in a suitable vulcanization line, adapted for defining the tyre structure according to a desired geometry and tread pattern.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is arranged between the carcass and the tread band. Such structure usually comprises, in the case of car tyres, at least two radially superposed layers of rubberised fabric provided with reinforcing cords, usually of metal material, arranged parallel to each other in each layer and in a crossed relationship with the cords of the adjacent layer, preferably symmetrically arranged with respect to the equatorial plane of the tyre. Preferably, the belt structure further comprises at a radially outer position thereof, at least on the ends of the underlying belt layers, also a third layer of textile or metallic cords, circumferentially disposed (at zero degrees).

Finally, in tyres of the tubeless type, a radially inner layer, called liner, is present which has imperviousness features for ensuring the air-tightness of the tyre itself.

To the aims of the present invention and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

In the present context, by the term "green tyre" it is indicated a tyre obtained by the building process and not vulcanized yet.

In the present description and in the following claims, by "sequential series" of work stations it is meant a set of at least three work stations arranged according to a predetermined sequence, wherein each work station between the first and the last is adjacent to two different work stations, a preceding one and a subsequent one, the first work station of said set being adjacent and preceding the second work station of said set and the last work station of said set being adjacent and subsequent to the penultimate work station of said set.

Thus, subsequent and adjacent work stations and subsequent and non adjacent work stations are found in a sequential series.

Of course, if the work stations are three, the second and the penultimate work station coincide.

In the present description and in the following claims, by "elementary component" it is meant an elementary semi-finished product in the form of at least one of the following: a continuous elongated element of elastomeric material; a rubber metal or textile reinforcing cord, that is, coated with elastomeric material; a ribbon-like element of elastomeric material cut to size comprising at least two textile or metal cords, hereinafter called "strip-like element".

In the present description and in the following claims, by "structural component" of the tyre it is meant any part of the tyre suitable for carrying out a function or a portion thereof. Structural components therefore are for instance the liner, the under-liner, the abrasion-proof element, the bead core, the bead filler, the carcass ply, the belt strip, the belt under-layer, the tread band under-layer, the sidewall inserts, the sidewalls, the tread band, the reinforcing inserts.

In the present description and in the following claims, by "model" of tyre it is meant the set of geometrical features (such as for example tread band width, sidewall height, fitting diameter), structural (such as for example one- or two-ply structure, radial or with crossed carcass plies, with or without belt structure, type of belt structure - with crossed belts, zero degrees, crossed belts and zero degrees -, type of tread band with one or more layers etc.), and technological (such as for example mixture of the various structural components, material constituting the textile or metal reinforcing cords, type of formation of the reinforcing cords, etcetera).

DE 10 2005 055609 discloses a transportation and production system used in building tire blanks having at least one carcass ply, an inner layer, sidewalls, two bead cores with core profiles, a belt assembly with at least two belt plies and a tread. Drums can be positioned on transportation devices and moved along at least one continuous transportation path having stations to be delivered to for building tire components. Selected building stations have at least two respective stations that can be travelled to alternately.

WO 01/32409, in the name of the same Applicant, describes a tyre building line provided with working stations, each arranged to make and assemble at least one structural component of the tyre being processed, wherein at least one series of tyres is treated at the same time, comprising at least one first and one second model of tyres differing from each other, and wherein the tyre transfer to the vulcanization line is carried out through robotized arms and according to a transferring rate equal to the transferring rate of the tyres to each of said working stations.

EP 1 481 791 A2 describes a method of simultaneously producing tyres in a multi-phase sequential production system, the tyres being selected from a group of tyres with different build specifications in different sizes. The method comprises the steps of; selecting the tyre building equipment and materials required for constructing the respective type of tyre; calculating the corresponding number of cycles that each building equipment must perform to build a given lot; and automatically changing to a second building specification at a lot change, by switching to the second build specification after the last tyre of the first build specification passes; repeating the automatic changing to the next build specification at each station as each last tyre of each prior lot passes until a final lot is produced. The production system has at least four carcass building stations, each station being spaced at a predetermined distance, and preferably a crown structure building line, having working stations, separate from the carcass building line, wherein the carcass structure and the crown structure are joined in a segmented self-locking mould.

EP 0 776 756 A1 describes an apparatus for building tyres for vehicle wheels having a carcass pack with an inner layer, at least one carcass ply, two sidewall portions and two beads having a crown structure with at least one belt strip and a tread band layer, wherein at least one carcass building station and/or a belt building station is provided with at least two connection devices, which may be controlled independently of one another for the connection with the materials, which are identical in nature, and at least one supplying device for supplying identical components, associated with each connection device.

The methods of the type described in WO 01/32409 are aimed at increasing productivity in building processes of tyres built on a toroidal forming support and using elementary components for building by automated, standardised steps, synchronised with each other. Such methods, however, do not allow obtaining a high technological flexibility, that is, the possibility of using for each tyre elementary components differing by type of elastomeric material or by type of textile or metal reinforcing cord. In fact, such methods are suitable for building tyres that differ in limited features, such as dimensions, optional presence of some structural components of the tyre - such as one or two carcass plies, reinforcing elements in bead zone - , arrangement of the coils of rubber metal wires forming the bead cores in the bead zone, more or less extended belt layer at zero degrees, presence of a layer and under-layer in the tread band.

The methods illustrated in EP 1 481 791 A2 and in EP 0 776 756 A1, on the other hand, are technologically flexible as they allow obtaining tyres with semi-finished products having different features from one another, but they are limited in terms of productivity, for example as the model of tyre to be produced changes and for the embodiment thereof, they require large sized plants.

The Applicant has noted that in the building plants of this latter type, the management of a large number of materials and/or semi-finished products causes problems in synchronising the building steps of the various portions making up the tyre and thereby problems in the general management of the production plant with negative consequences on productivity.

The Applicant has further noted that the teaching illustrated in EP 1 481 791 A2 and in EP 0 776 756 A1 relating to the mandatory passage of the carcass and crown structures being processed in every single work station of the relative building line causes important problems from the production point of view, as a bottleneck occurs which is difficult to handle both in the event of malfunctions and in the case of dimensional or technological variations in the tyre to be produced.

In particular, the Applicant has found that in all the plants illustrated in the aforementioned documents, in the event of failure of a single work station, the entire building plant must be blocked with the obvious drawbacks of the case.

The Applicant has therefore perceived that in order to build high quality tyres with very different technological requirements, avoiding standstills of the entire plant, improving flexibility and even productivity of the processes of the type of those illustrated in WO 01/32409, and avoiding production plants of large overall dimensions and difficult to manage like those illustrated in EP 1 481 791 A2 e in EP 0 776 756 A1, it is necessary to have separate building lines respectively dedicated to the carcass structure and to the crown structure, wherein each forming drum moving in the respective building lines must only pass in those work stations required for building that particular model of tyre.

The Applicant has finally found that the above illustrated problems may be solved by the use of a tyre building process providing transfers of the carcass structure being processed and of the crown structure being processed from one work station to the other of the respective building lines, wherein at least one transfer from a first work station to a second work station not adjacent thereto is carried out without envisaging passages in further work stations different from said first and second work station.

More precisely, in accordance with a first aspect thereof, the invention relates to a process for building green tyres for vehicle wheels comprising the steps of:
a) building a carcass structure on a first forming drum in at least one carcass structure building line comprising a plurality of work stations arranged according to a sequential series, said carcass structure comprising at least one carcass ply and a pair of annular anchoring structures;
b) building a crown structure on at least one second forming drum in at least one crown structure building line comprising a plurality of work stations arranged according to a sequential series, said crown structure comprising at least one belt structure;
c) toroidally shaping said carcass structure assembling it to said crown structure in at least one shaping and assembling work station for the tyre being processed;
wherein the transfers of each of said first forming drum and said second forming drum, with the respective carcass structure and crown structure being processed, from one work station to the other of the respective building lines comprise at least one step d) of transfer from a first work station to a second work station not adjacent to the first one in said sequential series, and
wherein each step d) of transfer takes place in such a way that the first forming drum and the second forming drum pass in said first and second work station without passing in other work stations.

The Applicant believes that since said process is compatible with the possibility of using different elementary components for each tyre produced and since it does not envisage any useless transfers in work stations not used for a predetermined model of tyre to be produced, it allows obviating the aforementioned drawbacks of low technological flexibility, improving the performance quality of the finished product and maintaining a high productivity.

The process according to the present invention therefore is technologically flexible and efficient.

In accordance with a second aspect thereof, the invention relates to a plant for building green tyres for vehicle wheels comprising:
- at least one carcass structure building line on a first forming drum, said carcass structure comprising at least one carcass ply and a pair of annular anchoring structures, comprising:
   - a plurality of work stations arranged according to a sequential series; and
   - at least one first handling device suitable for carrying out at least one first movement wherein it transfers the first forming drum with the relative carcass structure being processed from any first work station of said sequential series to any other second work station not adjacent thereto of said sequential series, so that the first forming drum passes in said first and second work station without passing in other work stations during said at least one first movement;
- at least one crown structure building line on at least one second forming drum, said crown structure comprising at least one belt structure, comprising:
   - a plurality of work stations arranged according to a sequential series; and
   - at least one second handling device suitable for carrying out at least one first movement wherein it transfers the second forming drum with the relative crown structure being processed from any first work station of said sequential series to any other second work station not adjacent thereto of said sequential series, so that the second forming drum passes in said first and second work station without passing in other work stations during said at least one first movement;
- at least one shaping and assembling work station for the tyre being processed suitable for shaping said carcass structure assembling it to said crown structure of the tyre being processed.

Canying out the above process, said plant achieves the same advantages mentioned above.

The present invention, in at least one of the above aspects thereof, can exhibit at least one of the following preferred features.

Advantageously, the first forming drum with the respective carcass structure being processed is transferred from one work station to the other in the respective building line by a movement of its centre of gravity in the space having at least one non-null vector component.

Preferably, the movement of the centre of gravity of the first forming drum has at least two non-null vector components.

Even more preferably, the movement of the centre of gravity of the first forming drum has three non-null vector components. This implies that the first forming drum has a considerable freedom of movement therefore it can be transferred to the work stations each time required by the path each time most convenient, with considerable advantages from the logistic and production point of view.

Likewise, the second forming drum with the respective crown structure being processed is transferred from one work station to the other in the respective building line by a movement of its centre of gravity in the space having at least one non-null vector component.

Preferably, the movement of the centre of gravity of the second forming drum has at least two non-null vector components.

Even more preferably, for the reasons explained above, the movement of the centre of gravity of the second forming drum has three non-null vector components.

According to preferred embodiments of the process of the invention, the first forming drum and the second forming drum are transferred from one work station to the other of the respective building lines at least partially simultaneously. Such feature allows obtaining a high productivity and an improved synchronisation of the different steps of the process of the invention.

Preferably, the first forming drum and the second forming drum are transferred from one work station to the other of the respective building lines by respectively at least one first handling device and at least one second handling device.

Advantageously, said first handling device comprises at least one first robotized arm.

Likewise, said second handling device comprises at least one second robotized arm.

According to preferred embodiments of the process of the invention, each carcass structure is associated with the respective first forming drum whereon it is built up to the end of step c) of shaping and assembling of the tyre being processed. Since no transfers of the carcass structure from the first forming drum to a different drum are envisaged, it is possible to increase the speed of the production process, simplify the operations thereof and increase the quality of the finished product.

Preferably, the tyres being simultaneously processed in said carcass structure building line and in said crown structure building line are at least of two different models.

According to preferred embodiments, said tyre models differ by geometrical features.

According to further preferred embodiments, said tyre models differ by structural features.

According to other preferred embodiments, said tyre models differ by technological features. This allows obtaining a high flexibility building process.

According to preferred embodiments, the above building process comprises, before step a) of building the carcass structure, a step z) of removably associating a pair of support rings to the first forming drum, said pair of support rings being suitable for cooperating with the first forming drum in building the carcass structure.

Preferably, the above process comprises the steps of picking up a first forming drum from a drums storage work station and placing said first forming drum in the carcass structure building line.

Advantageously, the step a) of building the carcass structure comprises the sub-step of:
a1) applying at least one beads reinforcing fabric in a position radially external and at least partially axially external to the first forming drum.

Said step a) of building the carcass structure preferably comprises at least two between the following sub-steps:
a2) applying at least one portion of an abrasion-proof element in a position radially external to the first forming drum;
a3) applying a liner layer in a position radially external to the first forming drum;
a4) applying an under-liner layer in a position radially external to said liner;
a5) applying at least one first carcass ply in a position radially external to the first forming drum.

Preferably, the step a4) of applying under-liner layer comprises the sub-step a4') of applying a layer of self-sealing material in a position radially external to the under-liner layer.

The step a) of building the carcass structure advantageously comprises also the sub-steps of:
a7) applying a plurality of internal reinforcements at said at least one carcass ply;
a6) applying a plurality of first intermediate elements between said at least one carcass ply and said plurality of internal reinforcements.

The same step a) of building the carcass structure, according to preferred embodiments of the process of the invention, comprises the sub-steps of:
a8) applying at least one pair of annular anchoring structures to the axially opposite ends of said at least one carcass ply;
a9) applying at least one portion of an abrasion-proof element;
a10) applying at least one portion of sidewalls of the tyre being processed.

Advantageously, the sub-step a8) of applying the annular anchoring structures comprises the following sub-steps:
a8') placing the annular anchoring structures at the axially opposite ends of said at least one carcass ply; and
a8") folding the ends of said at least one carcass ply onto said at least one carcass ply so as to form flaps that contain said annular anchoring structures.

Preferably, the sub-step a8) of applying the annular anchoring structures is preceded by a step of removing the pair of support rings from the first forming drum.

Advantageously, sub-step a8) of applying the annular anchoring structures is preceded by a step j) of transferring bead wires suitable for forming said annular anchoring structures from a bead wire storage work station operatively associated with a work station for applying annular anchoring structures of the carcass structure building line.

According to preferred embodiments of the above process, the step b) of building the crown structure comprises the sequential sub-steps of:
b1) applying an under-belt layer in a position radially external to the second forming drum;
b2) applying at least one first belt strip in a position radially external to said second forming drum;

Advantageously, said step b) of building the crown structure comprises the further sequential sub-steps of:
b3) laying at least one second intermediate element on the first belt strip;
b4) applying at least one second belt strip in a position radially external to said first belt strip;

Preferably, the step b) of building the crown structure comprises the sub-step of:
b5) applying at least one first layer of textile or metal cords, arranged circumferentially in a position radially external to said second belt strip, and applied at least at the axially external portions thereof.

According to some preferred embodiments of the above process, said step b) of building the crown structure comprises the sub-step of:
b6) applying a tread band under-layer in a position radially external to said belt structure.

Preferably, the step b) of building the crown structure further comprises the sub-step of:
b7) applying at least one tread band in a position radially external to said crown structure being processed.

Such sub-step b7), advantageously, comprises the application of at least two tread band portions.

Preferably, said at least two portions are radially overlapped tread band layers.

Preferably, the step b) of building the crown structure further comprises the sub-step of:
b8) applying at least one second portion of sidewalls in a position axially external to said crown structure being processed.

Advantageously, the step b) of building the crown structure comprises, after said sub-step b4) of applying at least one second belt strip, the sub-step of turning the ends of the first belt strip on said at least one second belt strip.

According to preferred embodiments, the process of the invention comprises, after the shaping and assembling step c), the step e) of transferring the shaped green tyre in a station for storing green tyres operatively associated with the shaping and assembling work station.

According to a particularly preferred embodiment, the step c) of shaping and assembling the green tyre comprises the sub-step of:
c1) transferring the crown structure from the second forming drum whereon it has been built in a position radially external to the carcass structure associated with the first forming drum.

Preferably, after the step a) of building the carcass structure of the green tyre, a step a') of transferring and storing the built carcass structure in a work station for storing carcass structures, arranged externally to the carcass structure building line, is carried out.

As an alternative, after the step a) of building the carcass structure of the green tyre, a step a") of transferring and storing the built carcass structure in the drums storage work station is carried out.

Likewise, after the step b) of building the crown structure of the green tyre, a step b') of transferring and storing the built crown structure in a work station for storing crown structures is carried out.

Preferably, after the shaping and assembling step c), a step of transferring the green tyre to a tyres checking and labelling work station is carried out.

According to a preferred embodiment of the invention, at least one between sub-steps a1), a5), a7), b2), b4) and b5) comprises the pre-step g) of supplying elementary components in the respective work stations.

In this case, the process of the invention preferably comprises the additional step h) of preparing elementary components in an elementary components preparation line.

Advantageously, the process of the invention further comprises the step i) of adjusting the dimensions of at least one between the first forming drum and the second forming drum.

More advantageously, step i) comprises the axial adjustment of the first forming drum.

In a further embodiment, step i), comprises the radial adjustment of the second forming drum.

Preferably, after the shaping and assembling step c), the process of the invention comprises a step f) of transferring the shaped green tyre to a tyre moulding and vulcanization line.

The invention also provides a process for producing tyres for vehicle wheels comprising, after the tyre building process illustrated above, a step of moulding and vulcanizing the shaped green tyre in at least one tyre moulding and vulcanization line separate from said shaping and assembling work station.

According to preferred embodiments of the plant for building green tyres for vehicle wheels, the above at least one first handling device is provided with devices for transferring the first forming drum with the respective carcass structure being processed from one work station to the other in the respective carcass structure building line by a movement of the centre of gravity of the first forming drum in the space having at least one non-null vector component.

Preferably, said movement of the centre of gravity of the first forming drum in the space has at least two non-null vector components.

Even more preferably, said movement of the centre of gravity of the first forming drum in the space has three non-null vector components, achieving the production and logistic advantages explained above.

Likewise, said at least one second handling device is provided with devices for transferring the respective second forming drum with the respective crown structure being processed from one work station to the other in the respective crown structure building line by a movement of the centre of gravity of the second forming drum in the space having at least one non-null vector component.

Preferably, said movement of the centre of gravity of the second forming drum in the space has at least two non-null vector components.

Even more preferably, said movement of the centre of gravity of the second forming drum in the space has three non-null vector components.

Preferably, the first handling device comprises at least one first robotized arm.

Preferably, said second handling device comprises at least one second robotized arm.

According to a preferred embodiment of the plant of the invention, the shaping and assembling work station is provided with shaping devices, associable with the first forming drum, suitable for carrying out the shaping of the carcass structure on the first forming drum.

Advantageously, the building plant comprises a work station for associating support rings provided with devices for removably associating a pair of support rings to the first forming drum, said pair of support rings being suitable for cooperating with the first forming drum in building the carcass structure.

In this case, the building plant preferably comprises also a work station for removing said pair of support rings from the first forming drum.

The plant preferably further comprises a drums storage work station provided with devices for transferring a first forming drum to the carcass structure building line.

Advantageously, the carcass structure building line comprises a work station for applying a reinforcing fabric provided with devices for applying at least one beads reinforcing fabric on a first forming drum.

Preferably, such carcass structure building line comprises at least two of the following work stations:
- a first abrasion-proof application work station provided with devices for applying at least one portion of an abrasion-proof element in a position radially external to the first forming drum;
- a liner application work station provided with devices for applying a liner layer in a position radially external to the first forming drum;
- an under-liner application work station provided with devices for applying an under-liner layer in a position radially external to said liner;
- a plies application work station provided with devices for applying at least one first carcass ply in a position radially external to the first forming drum;
- a work station for applying first intermediate elements provided with devices for applying a plurality of first intermediate elements at said at least one carcass ply;
- an internal reinforcements application work station provided with devices for applying a plurality of internal reinforcements at first intermediate elements;
- a work station for applying annular anchoring structures provided with devices for applying at least one pair of annular anchoring structures to the axially opposite ends of said at least one carcass ply;
- a second abrasion-proof application work station provided with devices for applying at least one portion of abrasion-proof element;
- a first sidewalls building work station provided with devices for applying at least one portion of sidewalls of the tyre being processed.

Advantageously, the carcass structure building line also comprises a work station for applying self-sealing material provided with devices for applying a layer of self-sealing material.

According to preferred embodiments of the plant of the invention, the work station for applying annular anchoring structures of the carcass structure building line is also provided with devices for folding the ends of said at least one carcass ply on said at least one carcass ply, so as to form flaps that contain said annular anchoring structures.

Preferably, the building plant further comprises a work station for storing bead wires suitable for forming the annular anchoring structures of the tyre being processed, said bead wire storage work station being operatively associated with the work station for applying annular anchoring structures.

According to preferred embodiments of the plant of the invention, the crown structure building line comprises the following work stations:
- an under-belt layer application work station provided with devices for applying an under-belt layer on the second forming drum;
- a work station for applying a first belt provided with devices for applying at least one first belt strip in a position radially external to the second forming drum.

The crown structure building line may also comprise the following work stations:
- a work station for laying second intermediate elements provided with devices for laying at least one second intermediate element on the first belt strip;
- a work station for applying a second belt provided with devices for applying at least one second belt strip in a position radially external to said first belt strip.

In this case, preferably, the crown structure building line comprises a cord application station provided with devices for applying at least one first layer of cords, arranged circumferentially on said at least one second belt strip, applied at least at the axially external portions thereof.

Preferably, the crown structure building line comprises at least one tread band building work station provided with devices for applying at least one tread band in a position radially external to the belt structure.

Even more preferably, the crown structure building line comprises four tread band building work stations.

According to one embodiment of the plant of the invention, the crown structure building line comprises at least one second sidewalls building work station provided with devices for applying at least one portion of sidewalls in a position axially external to the crown structure.

Preferably, the crown structure building line comprises at least one work station for turning up the belt structure suitable for turning up the ends of the first belt strip on said at least one second belt strip.

Preferably, in the above building plant, the crown structure building line comprises at least one tread band under-layer building work station provided with devices for applying one under-layer of the tread band in a position radially external to said belt structure.

Advantageously, the building plant of the invention comprises a work station for storing green tyres operatively associated with the shaping and assembling work station.

Preferably, the building plant of the invention comprises devices for transferring the green tyre from the shaping and assembling work station to the green tyre storage work station.

Advantageously, said devices for transferring the green tyre from the shaping and assembling work station to the green tyre storage work station comprise a robotized arm.

According to preferred embodiments of the invention, the green tyre shaping and assembling work station comprises:
- at least one stand-by position of the second forming drum;
- devices for transferring the crown structure for transferring it to a position radially external to the carcass structure associated with the first forming drum.

Preferably, the building plant also comprises a work station for storing carcass structures.

Preferably, the building plant also comprises a work station for storing crown structures.

The plant of the invention may further comprise a tyres checking and labelling work station.

According to preferred embodiments, the plant comprises a line for preparing elementary components suitable for being supplied in at least one between the carcass structure building line and the crown structure building line.

Preferably, the building plant of the invention comprises at least one work station for supplying elementary components operatively associated with at least one among: the reinforcing fabric application work station, the plies application work station, the internal reinforcements application work station, the first belt application work station, the second belt application work station, the cords application work station.

Advantageously, the plant comprises devices for adjusting the dimensions of at least one between the first forming drum and the second forming drum.

Preferably, the building plant comprises devices for transferring the green tyre in at least one tyre moulding and vulcanization line.

The invention also provides a tyre building plant comprising a plant for building green tyres as described above and at least one tyre moulding and vulcanization line.

Further features and advantages of invention will appear more clearly from the following description of some preferred examples of processes and plants for building green tyres according to the invention, made by way of an indicative non-limiting example with reference to the annexed drawing, wherein:

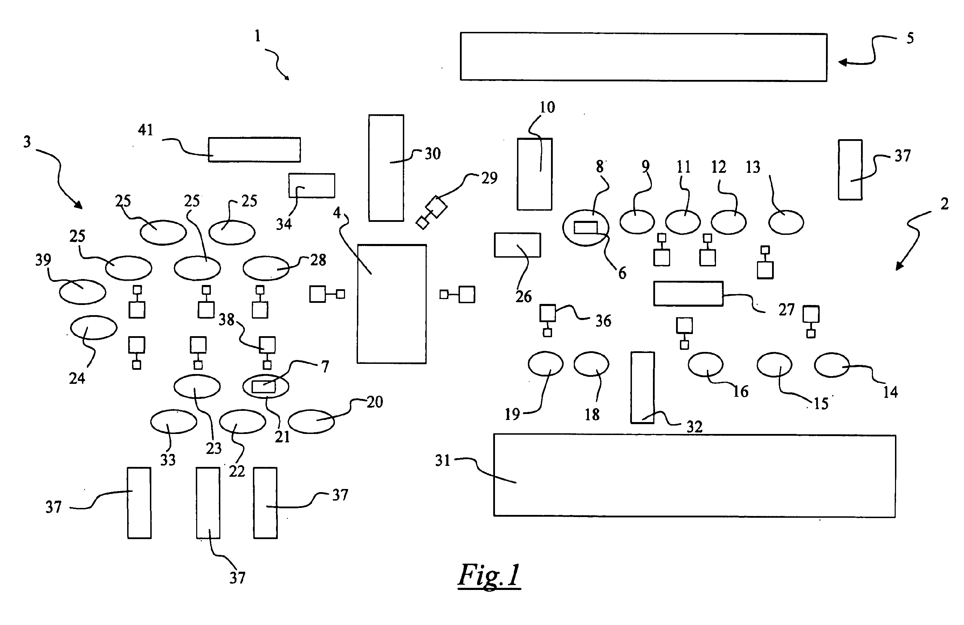

- figure 1 shows a schematic layout of a plant for building green tyres for vehicle wheels wherein the process according to one embodiment of the present invention is carried out.

With reference to figure 1, reference numeral 1 globally indicates a plant for building green tyres for vehicle wheels according to one preferred embodiment of the present invention.

In the preferred embodiment shown in the figure, such building plant comprises a carcass structure building line 2 on a first forming drum 6 and a crown structure building line 3 on a second forming drum 7.

The carcass structure to be built on such carcass structure building line 2 comprises at least one carcass ply and a pair of annular anchoring structures.

The carcass structure building line 2 comprises a plurality of work stations arranged according to a sequential series, as well as a first handling device. The latter is suitable for carrying out a first movement wherein it transfers the first forming drum 6 with the relative carcass structure being processed associated thereto from any first work station of said sequential series to any other second work station not adjacent thereto of said sequential series, so that the first forming drum 6 only passes in said first and second work station during said at least one first movement.

The crown structure to be built in the crown structure building line 3 comprises at least one belt structure.

The crown structure building line 3 comprises a plurality of work stations arranged according to a sequential series, as well as a second handling device. The latter is suitable for carrying out a first movement wherein it transfers the second forming drum 7 with the relative crown structure being processed associated thereto from any first work station of said sequential series to any other second work station not adjacent thereto of said sequential series, so that the second forming drum 7 only passes in said first and second work station during said at least one first movement.

In other words, said first handling device and second handling device allow transfers of the first forming drum 6 and of the second forming drum 7 from one work station to the other skipping the stations not required for building a predetermined model of tyre.

In particular, the first handling device is provided with devices for transferring the first forming drum 6 with the respective carcass structure being processed from one work station to the other in the carcass structure building line 2 by a movement of the centre of gravity of the first forming drum 6 in the space having at least one non-null vector component.

Preferably, the non-null vector components are two but more preferably, they are three so that the first forming drum moves freely in the space.

As shown in figure 1, the first handling device comprises a first robotized arm 36.

Likewise, the second handling device is provided with devices for transferring the respective second forming drum 7 with the respective crown structure being processed from one work station to the other in the crown structure building line 3 by a movement of the centre of gravity of the second forming drum 7 in the space having at least one, preferably two, more preferably three non-null vector components.

As shown in figure 1, also first second device comprises a second robotized arm 38.

The building plant 1 further comprises one work station 4 for shaping and assembling the tyre being processed suitable for shaping the carcass structure assembling it to the crown structure of the tyre being processed.

Such shaping and assembling work station 4 is provided with shaping devices associable with the first forming drum 6. Said shaping devices, not shown in the figure, are suitable for carrying out the shaping of the carcass structure on the first forming drum 6.

Said shaping and assembling work station 4 further comprises one or more stand-by positions of the second forming drum 7, as well as crown structure transfer devices suitable for transferring it to a position radially external to the carcass structure associated with the first forming drum 6.

The building plant 1 comprises both a work station for associating support rings 26 which is provided with devices for removably associating a pair of support rings with the first forming drum 6, and a work station for removing the pair of support rings 27 from the first forming drum 6. The pair of support rings is suitable for cooperating with the first forming drum 6 for building the carcass structure.

As can be seen in figure 1, the building plant 1 further comprises a drums storage work station 10 that performs the function of buffer and that may be provided with devices for transferring the first forming drum 6 to the carcass structure building line 2.

The carcass structure building line 2 comprises a work station for applying a reinforcing fabric 8 which is provided with devices for applying at least one beads reinforcing fabric on the first forming drum 6. In the embodiment shown in the figure, it is arranged in the proximity of the drums storage work station 10 since the first carcass structure building step is generally carried out therein.

The carcass structure building line 2, in the embodiment shown in the figure, further comprises a first abrasion-proof application work station 9 which is provided with devices for applying at least one portion of an abrasion-proof element in a position radially external to the first forming drum 6.

The carcass structure building line 2 further comprises a liner application work station 11 which is provided with devices for applying a layer of liner in a position radially external to the first forming drum 6, as well as an under-liner application work station 12 provided with devices for applying a layer of under-liner in a position radially external to said liner.

The carcass structure building line 2 also comprises a work station for applying self-sealing material, not shown in the figure, provided with devices for applying a layer of self-sealing material, for example in a position radially external to the under-liner layer.

The carcass structure building line 2 then comprises a plies application work station 13 which is provided with devices for applying one or more carcass plies in a position radially eternal to the first forming drum 6.

As is seen in the figure, the carcass structure building line 2 comprises a work station for applying first intermediate elements 14 which is provided with devices for applying a plurality of first intermediate elements at the carcass ply(ies).

An internal reinforcements application work station 15 is also provided, which is provided with devices for applying a plurality of internal reinforcements at first intermediate elements.

The carcass structure building line 2 includes a work station for applying annular anchoring structures 16. Such work station is provided with devices for applying at least one pair of annular anchoring structures to the axially opposite ends of the carcass ply(ies).

It may also be provided with devices for folding the ends of the carcass ply(ies) onto the carcass ply itself so as to form flaps that contain the above annular anchoring structures.

The carcass structure building line 2 further comprises a second abrasion-proof application work station 18, provided with devices for applying at least one portion of an abrasion-proof element, as well as a first sidewalls building work station 19 provided with devices for applying at least one first portion of sidewalls of the tyre being processed.

The building plant 1 further comprises a bead wires storing work station 32 for storing bead wires suitable for forming the annular anchoring structures of the tyre being processed. Said bead wires storing work station 32 is operatively associated with the work station for applying annular anchoring structures 16.

The crown structure building line 3 comprises a work station for applying an under-belt layer 20 which is provided with devices for applying an under-belt layer on the second forming drum 7.

The crown structure building line 3 also comprises a work station for applying a first belt 21 which is provided with devices for applying at least one first belt strip in a position radially external to the second forming drum 7.

A work station for laying second intermediate elements 22 provided with devices for laying at least one second intermediate element on the first belt strip is provided in the crown structure building line 3.

The same building line comprises a work station for applying a second belt 23 which is provided with devices for applying at least one second belt strip in a position radially external to the first belt strip.

The crown structure building line 3 further comprises a cords application work station 24 which is provided with devices for applying at least one first layer of cords, arranged circumferentially on said at least one second belt strip. Such cord layer is applied at least at the axially external portions of the second belt strip. Said cord layer is generally called belt layer at 0 degrees.

The crown structure building line 3 also comprises a work station for turning up the belt structure 33 suitable for turning up the ends of the first belt strip on said at least one second belt strip.

Preferably, the crown structure building line 3 also comprises one tread band under-layer building work station 39 provided with devices for applying one tread band under-layer in a position radially external to the belt structure.

In the crown structure building line 3 there is provided the presence of at least one tread band building work station 25. The latter is provided with devices for applying at least one tread band in a position radially external to the belt structure.

In the preferred embodiment shown in figure 1, such tread band building work stations 25 are four.

Finally, the crown structure building line 3 comprises one second sidewalls building work station 28 provided with devices for applying at least one second portion of sidewalls in a position radially external to the crown structure.

The building plant 1 comprises a work station for storing green tyres 30 which is operatively associated with the shaping and assembling work station 4 and preferably arranged in the proximity thereof.

Devices for transferring the green tyre from the shaping and assembling work station 4 to the green tyre storage work station 30 are provided in the preferred embodiment of the invention.

Such devices for transferring the green tyre from the shaping and assembling work station 4 to the green tyre storage work station 30 preferably comprise the robotized arm 29 shown in the figure.

The building plant 1 may further comprise a crown structure storage work station 41 and/or a carcass structure storage work station, not shown in the figure.

The tyres checking and labelling work station 34 is provided in the plant of the invention shown in the figure.

Said building plant 1 further comprises an elementary components preparation line 31 which elementary components are suitable for being supplied in the carcass structure building line 2 and/or in the crown structure building line 3 through special elementary component supplying work stations 37.

Preferably, the elementary components prepared in the elementary components preparation line 31 are strip-like elements or rubber metal or textile cords used for building some structural components of the tyre, such as for example carcass plies, belt strips, reinforcements. The above strip-like elements, when used, are applied on different first and second forming drum 6, 7, substantially side by side to one another, in the different work stations used for making the carcass plies, the belt strips and the reinforcements. On the other hand, the cords are wound by spiralling, for example forming the above first layer of cords in a position radially external to at least said second belt strip.

An elementary component supplying work station 37 is operatively associated with the reinforcing fabric application work station 8 and/or to the plies application work station 13, and/or to the internal reinforcements application work station 15, and/or to the first belt application work station 21, and/or to the second belt application work station 23, and/or to the cords application work station 24.

At least one of the work stations illustrated above dedicated to making structural components of the tyre of elastomeric material only, such as for example under-liner, liner, abrasion-proof element, sidewalls, tread band under-layer, under-belt layer, tread band, intermediate elements, preferably comprises devices for dispensing a continuous elongated element of elastomeric material for building the respective structural element of the tyre by a plurality of side by side and/or at least partially overlapped coils of said continuous elongated element on said first forming drum 6 and/or second forming drum 7.

Devices for adjusting the dimensions of the first forming drum 6 and/or of the second forming drum 7 are provided in the plant of the invention, while they are not shown in the figure.

The building plant 1 further comprises devices for transferring the green tyre in a moulding and vulcanization line 5 of the tyre. In such moulding and vulcanization line 5, the tyre building process ends with the tyre moulding and vulcanization step.

The process for building a green tyre according to the invention provides a step a) of building a carcass structure of a green tyre on a first forming drum 6 in at least one carcass structure building line 2; a step b) of building a crown structure of a green tyre on at least one second forming drum 7 in at least one crown structure building line 3; and a step c) of toroidal shaping of the carcass structure and subsequent assembling the same to the crown structure in at least one work station 4 for shaping and assembling the tyre being processed.

In the process according to the invention, the transfers of the first forming drum 6 and of the second forming drum 7, with the respective carcass structure and crown structure being processed, from one work station to the other of the respective building lines 2, 3 comprise at least one step d) of transfer from a first work station to a second work station not adjacent to the first one wherein each step d) of transfer takes place so that the first forming drum 6 and the second forming drum 7 only pass in said first and second work station.

The first forming drum 6 and the second forming drum 7, with the respective carcass structure and crown structure being processed, are transferred from one work station to the other of the respective building lines 2, 3 at least partially simultaneously and by a movement of their centres of gravity in the space having at least one non-null vector component. Such non-null vector components, according to preferred embodiments, are three.

Moreover, the first and the second forming drum 6, 7 are transferred from one work station to the other by respectively at least one first handling device that comprises at least one first robotized arm 36 and at least one second handling device that comprises at least one second robotized arm 38.

Upstream step a) of building the carcass structure, the following are provided:
- a step of picking up a first forming drum 6 from one drums storage work station 10;
- a step of placing said first forming drum 6 in the carcass structure building line 2; and
- a step z) of removably associating a pair of support rings - suitable for cooperating in building the carcass structure - with the first forming drum 6.

The step a) of building the carcass structure comprises the sub-steps of:
a1) applying a beads reinforcing fabric in a position radially external and at least partially axially external to the first forming drum 6;
a2) applying at least one portion of an abrasion-proof element in a position radially external to the first forming drum 6;
a3) applying a liner layer in a position radially external to the first forming drum 6;
a4) applying an under-liner layer in a position radially external to the liner;
a4') applying a self-sealing material layer, preferably in a position radially external to the under-liner layer;
a5) applying at least one first carcass ply in a position radially external to the first forming drum 6;
a7) applying a plurality of internal reinforcements at said at least one carcass ply;
a6) applying a plurality of first intermediate elements between said at least one carcass ply and said plurality of internal reinforcements;
a8) applying at least one pair of annular anchoring structures to the axially opposite ends of the carcass ply by:
   a8') placing the annular reinforcing structures at the axially opposite ends of the carcass ply; and
   a8") folding the ends of the carcass ply onto the carcass ply itself so as to form flaps that contain the annular anchoring structures;
a9) applying at least one portion of an abrasion-proof element;
a10) applying at least one first portion of sidewalls of the tyre being processed.

It is possible to carry out all of the above sub-steps or it is possible to skip some of them based on the geometrical, structural and technological features of the model of tyre to be produced.

At the end of step a) it is possible to carry out one of the following two alternative steps:
a') transferring and storing the built carcass structure in a carcass structure storage work station arranged externally to the carcass structure building line 2; or
a") transferring and storing the built carcass structure in the drums storage work station 10.

The sub-step a8) of applying the annular anchoring structures is preceded by:
- a step of removal of the pair of support rings from the first forming drum 6;
- a step j) of transferring bead wires suitable for forming the annular anchoring structures from a bead wire storage work station 32 operatively associated with a work station for applying annular anchoring structures 16 of the carcass structure building line 2.

The step b) of building the crown structure comprises the sequential sub-steps of:
b1) applying an under-belt layer in a position radially external to the second forming drum 7;
b2) applying at least one first belt strip in a position radially external to the second forming drum 7;
b3) laying at least one second intermediate element on the first belt strip;
b4) applying at least one second belt strip in a position radially external to the first belt strip;
b5) applying a first layer of textile or metal cords, arranged circumferentially in a position radially external to said at least one second belt strip (that is, to the radially external belt strip), and applied at least at the axially external portions thereof;
b6) applying a tread band under-layer in a position radially external to the belt structure;
b7) applying two portions of tread band in a position radially external to the crown structure being processed (preferably said at least two portions are two radially overlapped tread band layers);
b8) applying at least one second portion of sidewalls in a position axially external to the crown structure being processed.

It is possible to carry out all of the above sub-steps or it is possible to skip some of them based on the geometrical, structural and technological features of the tyre to be produced.

The step b) of building the crown structure may comprise, after the sub-step b4) of applying at least one second belt strip, the sub-step of turning the ends of the first belt strip on said at least one second belt strip.

Downstream step b) it is possible to provide a step b') of transferring and storing the built crown structure in a crown structure storage work station 41.

The step c) of shaping and assembling the green tyre comprises the sub-step c1) of transferring the crown structure from the second forming drum 7 whereon it has been built in a position radially external to the carcass structure associated with the first forming drum 6.

The process of the invention provides that each carcass structure is associated with the respective first forming drum 6 whereon it is built up to the end of step c) of shaping and assembling of the tyre being processed.

After such step c), a step f) is provided of transferring the green tyre in a tyres checking and labelling work station 34 and/or a step e) of transferring the shaped green tyre in a green tyre storage work station 30.

With reference to the building plant 1 illustrated in figure 1, a preferred embodiment of a process for building two green tyres A and B of different model according to the invention shall now be described.

The carcass structure of a tyre of model A is built on a first forming drum 6, according to a step a) of the process of the invention.

At first, a first forming drum 6 is selected with a fitting suitable for producing the desired model of tyre A. It may be picked up from a drums storage work station 10 or arrive directly from the end of a previous building process. The first forming drum 6 is subject to axial adjustment and then transferred to a support ring association work station 26. In such work station 26, a pair of support rings suitable for cooperating with the first forming drum 6 in building the carcass structure is removably associated with the first forming drum 6.

At this point, the first forming drum 6 may be arranged in a stand-by position in the drums storage work station 10 or be directly introduced in the carcass structure building line 2.

The first forming drum 6 is transferred in the reinforcing fabric application work station 8 wherein the step a1) of application of a beads reinforcing fabric is carried out. Subsequently, the first forming drum 6 is transferred by a robotized arm from the reinforcing fabric application work station 8 to the abrasion-proof application work station 9 wherein a portion of abrasion-proof element is applied according to step a2) of the process of the invention.

Afterwards, the first forming drum 6, with the carcass structure being processed, is transferred by a different robotized arm to a liner application work station 11 wherein a liner layer is applied according to step a3).

After the application of the liner, a robotized arm picks up the first forming drum 6 for transferring it to the under-liner application work station 12 wherein an under-liner layer is applied externally to the liner layer according to step a4) of the process of the invention.

Afterwards, the first forming drum 6 is transferred by a further robotized arm to a plies application work station 13 without passing by the self-sealing material application work station and thus carrying out the above step d). In the plies application work station 13, a carcass ply is applied according to step a5) of the process of the invention.

Afterwards, the first forming drum 6 is transferred in the annular anchoring structure application work station 16 without passing by the first intermediate element application work station 14 nor by the internal reinforcements application work station 15, carrying out the above step d) again. Here, step a8) is carried out for the application of a pair of annular anchoring structures at the axially opposite ends of the carcass ply.

At that point, a robotized arm transfers the first forming drum 6 in a work station for removing the pair of support rings 27 wherein the pair of support rings is removed from the first forming drum 6.

Such annular anchoring structures comprise bead cores associated with respective fillers previously transferred in the annular anchoring structure application work station 16 from a bead core storage work station 32 according to a step j).

The above step a8) is carried out by placing the annular anchoring structures at the axially opposite ends of the carcass ply - step a8') - and folding the ends of the carcass ply on the same carcass ply, so as to form flaps that contain the annular anchoring structures - step a8").

Subsequently, the first forming drum 6 is transferred in a second abrasion-proof application work station 18 wherein said step a9) of applying at least one portion of abrasion-proof element is carried out.

Finally, the first forming drum 6 is transferred in the sidewalls building work station 19 wherein the step a10) of applying sidewalls of tyre A being processed is carried out. Such step ends the step a) of building the carcass structure of tyre A being processed.

At this point, the carcass structure of tyre A being processed may be transferred in a carcass structure storage work station, according to step a') or in the drums storage work station 10 according to step a") of the process of the invention.

As an alternative, the carcass structure may be directly transferred in the shaping and assembling work station 4.

In succession and simultaneously with the process for building the carcass structure of tyre A, the carcass structure of a tyre B of a model differing from tyre A is built on a different first forming drum 6, according to a step a) of the process of the invention.

A first forming drum 6 is selected with a fitting suitable for producing the desired model of tyre B. It may be picked up from a drums storage work station 10 or arrive directly from the end of a previous building process. The first forming drum 6 is subject to axial adjustment and then transferred to a support ring association work station 26. In such work station, a pair of support rings suitable for cooperating with the first forming drum 6 in building the carcass structure is removably associated with the first forming drum 6.

At this point, the first forming drum 6 may be arranged in a stand-by position in the drums storage work station 10 or be directly introduced in the carcass structure building line 2.

The first forming drum 6 is transferred by a three-dimensional movement of the centre of gravity thereof by a robotized arm, directly to the abrasion-proof application work station 9 wherein a portion of abrasion-proof element is applied according to step a2), without first passing in the reinforcing fabric application work station 8, applying the above step d) of the process according to the invention again.

Afterwards, the first forming drum 6, with the carcass structure being processed, is transferred by a different robotized arm to a liner application work station 11 wherein a liner layer is applied according to step a3) of the process of the invention.

After the application of the liner, a robotized arm picks up the first forming drum 6 for transferring it to the under-liner application work station 12 wherein an under-liner layer is applied externally to the liner layer according to step a4) of the process of the invention.

Subsequently, the first forming drum 6 is transferred by a further robotized arm in a plies application work station 13 wherein two carcass plies are applied in a position radially external to the first forming drum 6 according to step a5) of the process of the invention.

Afterwards, the first forming drum 6 is transferred, by another three-dimensional movement of the centre of gravity thereof, in the annular anchoring structure application work station 16 without passing by the first intermediate element application work station 14 nor by the internal reinforcements application work station 15, carrying out a step d) again. Step a8) is carried out in the annular anchoring structure application work station 16 for applying a pair of annular anchoring structures to the axially opposite ends of the carcass ply.

At that point, a robotized arm transfers the first forming drum 6 in a work station for removing the pair of support rings 27 wherein the pair of support rings is removed from the first forming drum 6.

Such annular anchoring structures comprise bead cores associated with respective fillers previously transferred in the annular anchoring structure application work station 16 from a bead core storage work station 32 according to a step j).

The above step a8) is carried out by placing the annular anchoring structures at the axially opposite ends of the carcass plies - step a8') - and folding the ends of the radially external carcass ply on the radially internal carcass ply, so as to form flaps that contain the annular anchoring structures - step a8").

Subsequently, the first forming drum 6 is transferred in a second abrasion-proof application work station 18 wherein said step a9) of applying at least one portion of abrasion-proof element is carried out.

Finally, the first forming drum 6 is transferred in the sidewalls building work station 19 wherein the step a10) of applying a first portion of the sidewalls of tyre B being processed is carried out. Such step ends the step a) of building the carcass structure of tyre B being processed.

At this point, the carcass structure of tyre B being processed may be transferred in a carcass structure storage work station, according to step a') or in the drums storage work station 10 according to step a") of the process of the invention.

As an alternative, the carcass structure of tyre B may be directly transferred in the shaping and assembling work station 4.

Simultaneously to the step of building the carcass structure of tyres A and B, the crown structures of the same tyres being processed A and B are built in the crown structure building line 3, according to step b).

Prior to the start of such step b), a second forming drum 7 is selected with an external surface suitable for producing the desired model of tyre A. It may be picked up from a second drums storage work station or arrive directly from the end of a previous building process. The second forming drum 7 is subject to radial adjustment and then transferred in the under-belt layer application work station 20, where the step b1) of application of an under-belt layer in a position radially external to the second forming drum 7 is carried out.

Subsequently, the second forming drum 7 is transferred in the first belt application work station 21 wherein the step b2) of applying a first belt strip in a position radially external to the second forming drum 7 is carried out.

A robotized arm picks up the second forming drum 7 and transfers it in a work station for applying second intermediate elements 22 wherein the step b3) of the process according to the invention is carried out.

Afterwards, the second forming drum 7 is transferred by another robotized arm in a second belt application work station 23 wherein a second belt strip is applied on the second intermediate elements according to step b4).

Subsequently, the second forming drum 7 is transferred by a further robotized arm in a belt structure turning work station 33 wherein the ends of the first belt strip are turned up on the second belt strip.

At the end of the turning up step, the second forming drum 7 is transferred in a cords application work station 24 wherein a first cord layer is applied at the axially external portions of the second belt strip, according to step b5) of the process of the invention.

At the end of step b5), the second forming drum 7 is transferred in a tread band under-layer building work station 39 wherein an under-layer of the tread band is applied in a position radially external to said belt structure, according to step b6).

Subsequently, the second forming drum 7 is transferred in a first tread band building work station 25 wherein a first step b7) of applying a first tread band layer in a position radially external to the crown structure being processed is carried out. A second step b7) is then carried out for applying a second layer of tread band in a second tread band building work station 25.

Finally, the second forming work station 7 carrying the crown structure of tyre A is transferred in a crown structure storage work station 41 without passing by the remaining two tread band building work stations 25 and by the second sidewalls building work station 28, thus carrying out the above step d) and the step b') of the process of the invention. This last transfer of the second forming drum 7 is also carried out according to a three-dimensional movement of its centre of gravity, preferably by at least one robotized arm.

As an alternative, the second forming drum 7 may be directly transferred in the shaping and assembling work station 4.

In a succession and simultaneously to the step of building the crown structure of tyre A, the crown structure of the tyre being processed B is built in the crown structure building line 3, according to step b).

Prior to the start of such step b), a second forming drum 7 is selected with an external surface suitable for producing the desired model of tyre B. It may be picked up from a second drums storage work station or arrive directly from the end of a previous building process. The second forming drum 7 is subject to radial adjustment and then transferred in the under-belt layer application work station 20, where the step b1) of application of an under-belt layer in a position radially external to the second forming drum 7 is carried out.

Subsequently, the second forming drum 7 is transferred in the first belt application work station 21 wherein the step b2) of applying a first belt strip in a position radially external to the second forming drum 7 is carried out.

A robotized arm picks up the second forming drum 7 and transfers it in a work station for applying second intermediate elements 22 wherein the step b3) of laying a second intermediate element is carried out.

Afterwards, the second forming drum 7 is transferred by another robotized arm in a second belt application work station 23 wherein a second belt strip is applied on the second intermediate elements according to step b4).

At the end of the application of the belt strips, the second forming drum 7, by a three-dimensional movement of its centre of gravity, is transferred in a cords application work station 24, without passing in the belt structure turning up work station 33 and thus carrying out the above step d). In such cords application work station 24, a first cord layer is applied at the axially external portions of the second belt strip, according to step b5) of the process of the invention.

At the end of step b5), the second forming drum 7 is transferred in a tread band under-layer building work station 39 wherein an under-layer of the tread band is applied in a position radially external to said belt structure, according to step b6).

Subsequently, the second forming drum 7 is transferred in a first tread band building work station 25 wherein a first step b7) of applying a first tread band layer in a position radially external of the crown structure being processed is carried out. A second step b7) is then carried out for applying a second layer of tread band in a second tread band building work station 25.

At the end of the application of the tread band, the second forming drum 7 is transferred without passing by the further two tread band building work stations 25 in a sidewalls building work station 28, according to said step d). Here, a step b8) of applying a second portion of sidewalls in a position axially external to the crown structure being processed is carried out.

Finally, the second forming drum 7 carrying the crown structure of tyre B is transferred in a crown structure storage work station 41, according to a step b') of the process of the invention. As an alternative, it may be directly transferred in the shaping and assembling work station 4.

In the above examples, the above transfers of the first forming drum 6 and of the second forming drum 7 take place in the space with considerable freedom. They are carried out by different handling devices comprising a first handling device for the transfers of the first forming drum 6 and a second handling device for the transfers of the second forming device 7. Such handling devices comprise at least one robotized arm 36, 38.

In the shaping and assembling work station 4, that receives the carcass structure and the crown structure of tyre A and of tyre B in a succession, step c) of toroidally shaping the carcass structure assembling it to the crown structure of the respective tyre is carried out. In particular, said step c) is carried out by transferring the crown structure from the second forming drum 7 whereon it has been built in a position radially external to the carcass structure associated with the first forming drum 6, according to sub-step c1). Thus, each carcass structure is associated with the respective first forming drum 6 until the end of step c).

At the end of step c), the building process of the green tyre A and the building process of the green tyre B are complete. Tyres A and B are thus transferred to a green tyre storage work station 30, by a robotized arm 29 according to a step e), or in a tyres checking and labelling work station 34, or in a tyre moulding and vulcanization line, according to a step f).

In this latter case, tyres A and B are moulded and vulcanized thus turning into finished products.

## Claims

1. Process for building green tyres for vehicle wheels comprising the steps of;
a) building a carcass structure on a first forming drum (6) in at least one carcass structure building line (2) comprising a plurality of work stations arranged according to a sequential series, said carcass structure comprising at least one carcass ply and a pair of annular anchoring structures;
b) building a crown structure on at least one second forming drum (7) in at least one crown structure building line (3) comprising a plurality of work stations arranged according to a sequential series, said crown structure comprising at least one belt structure;
c) toroidally shaping said carcass structure assembling it to said crown structure in at least one shaping and assembling work station (4) for the tyre being processed;
wherein the transfers of each of said first forming drum (6) and said second forming drum (7), with the respective carcass structure and crown structure being processed, from one work station to the other of the respective building lines (2, 3) comprise at least one step d) of transfer from a first work station to a second work station not adjacent to the first one in said sequential series, and
wherein each step d) of transfer takes place in such a way that the first forming drum and the second forming drum (7) pass in said first and second work station without passing in other work stations.

2. A process for building green tyres for vehicle wheels according to claim 1, wherein said first forming drum (6) with the respective carcass structure being processed is transferred from one work station to the other in the respective building line (2) by a movement of its centre of gravity in the space having at least one non-null vector component.

3. A process for building green tyres for vehicle wheels according to claim 2, wherein said movement of the centre of gravity of said first forming drum (6) has three non-null vector components.

4. A process for building green tyres for vehicle wheels according to claim 1, wherein said second forming drum (7) with the respective crown structure being processed is transferred from one work station to the other in the respective building line (3) by a movement of its centre of gravity in the space having at least one non-null vector component.

5. A process for building green tyres for vehicle wheels according to claim 4, wherein said movement of the centre of gravity of said second forming drum (7) has three non-null vector components.

6. A process for building green tyres for vehicle wheels according to any one of the previous claims, wherein said first forming drum (6) and said second forming drum (7) are transferred from one work station to the other of the respective building lines (2, 3) at least partially simultaneously.

7. A process for building green tyres for vehicle wheels according to any one of the previous claims, wherein said first forming drum (6) and said second forming drum (7) are transferred from one work station to the other of the respective building lines (2, 3) respectively through at least one first handling device and at least one second handling device.

8. A process for building green tyres for vehicle wheels according to claim 7, wherein said first handling device comprises at least one first robotized arm (36).

9. A process for building green tyres for vehicle wheels according to claim 7, wherein said second handling device comprises at least one second robotized arm (38).

10. A process for building green tyres for vehicle wheels according to any one of the previous claims, wherein each carcass structure is associated with the respective first forming drum (6) whereon it is built up to the end of step c) of shaping and assembling of the tyre being processed.

11. A process for building green tyres for vehicle wheels according to any one of the previous claims, wherein the tyres being simultaneously processed in said carcass structure building line (2) and in said crown structure building line (3) are at least of two different models.

12. A process for building green tyres for vehicle wheels according to any one of the previous claims comprising, before step a) of building the carcass structure, a step z) of removably associating a pair of support rings to said first forming drum (6), said pair of support rings being suitable for cooperating with said first forming drum (6) in building said carcass structure.

13. A process for building green tyres for vehicle wheels according to any one of the previous claims, comprising the steps of picking up a first forming drum (6) from a drums storage work station (10) and placing said first forming drum (6) in said carcass structure building line (2).

14. A process for building green tyres for vehicle wheels according to any one of the previous claims comprising, after the shaping and assembling step c), the step e) of transferring the shaped green tyre in a green tyres storing work station (30) operatively associated with the shaping and assembling work station (4).

15. A process for building green tyres for vehicle wheels according to any one of the previous claims, further comprising the step i) of adjusting the dimensions of at least one between the first forming drum (6) and the second forming drum (7).

16. A plant (1) for building green tyres for vehicle wheels comprising:
- at least one carcass structure building line (2) on a first forming drum (6), said carcass structure comprising at least one carcass ply and a pair of annular anchoring structures, comprising:
- a plurality of work stations arranged according to a sequential series; and
- at least one first handling device suitable for carrying out at least one first movement wherein it transfers the first forming drum (6) with the relative carcass structure being processed from any first work station of said sequential series to any other second work station not adjacent thereto of said sequential series, so that the first forming drum (6) passes in said first and second work station without passing in other work stations during said at least one first movement;
- at least one crown structure building line (3) on at least one second forming drum (7), said crown structure comprising at least one belt structure, comprising:
- a plurality of work stations arranged according to a sequential series; and
- at least one second handling device suitable for carrying out at least one first movement wherein it transfers the second forming drum (7) with the relative crown structure being processed from any first work station of said sequential series to any other second work station not adjacent thereto of said sequential series, so that the second forming drum (7) passes in said first and second work station without passing in other work stations during said at least one first movement;
- at least one shaping and assembling work station (4) for the tyre being processed suitable for shaping said carcass structure assembling it to said crown structure of the tyre being processed.

17. A plant (1) for building green tyres for vehicle wheels according to claim 16, wherein said at least one first handling device is provided with devices for transferring said first forming drum (6) with the respective carcass structure being processed from one work station to the other in the respective carcass structure building line (2) by a movement of the centre of gravity of said first forming drum (6) in the space having at least one non-null vector component.

18. A plant (1) for building green tyres for vehicle wheels according to claim 17, wherein said movement of the centre of gravity of said first forming drum (6) has three non-null vector components in the space.

19. A plant (1) for building green tyres for vehicle wheels according to claim 16, wherein said at least one second handling device is provided with devices for transferring the respective second forming drum (7) with the respective crown structure being processed from one work station to the other in the respective crown structure building line (3) by a movement of the centre of gravity of said second forming drum (7) in the space having at least one non-null vector component.

20. A plant (1) for building green tyres for vehicle wheels according to claim 19, wherein said movement of the centre of gravity of said second forming drum (7) has three non-null vector components in the space.

21. A plant (1) for building green tyres for vehicle wheels according to any one of claims 16 - 20, wherein said first handling device comprises at least one first robotized arm (36).

22. A plant (1) for building green tyres for vehicle wheels according to any one of claims 16 - 20, wherein said second handling device comprises at least one second robotized arm (3 8).

23. A plant (1) for building green tyres for vehicle wheels according to any one of claims 16 - 22, wherein said shaping and assembling work station (4) is provided with shaping devices, associable with said first forming drum (6), suitable for currying out the shaping of the carcass structure on said first forming drum (6).

24. A plant (1) for building green tyres for vehicle wheels according to any one of claims 16 - 23, comprising devices for transferring the green tyre from the shaping and assembling work station (4) to the green tyres storing work station (30).

25. A plant (1) for building green tyres for vehicle wheels according to claim 24, wherein said devices for transferring the green tyre from the shaping and assembling work station (4) to the green tyres storing work station (30) comprise a robotized arm (29).

## Patentansprüche

1. Verfahren zur Fertigung von Rohreifen für Fahrzeugräder, das die Schritte umfasst:
a) Fertigen einer Karkassenstruktur auf einer ersten Formtrommel (6) in zumindest einer Karkassenstrukturfertigungslinie (2), die mehrere Arbeitsstationen umfasst, die gemäß einer fortlaufenden Reihe angeordnet sind, wobei die Karkassenstruktur zumindest eine Karkassenlage und ein Paar ringförmiger Verstärkungsstrukturen aufweist;
b) Fertigen einer Kronenstruktur auf zumindest einer zweiten Formtrommel (7) in zumindest einer Kronenstrukturfertigungslinie (3), die mehrere Arbeitsstationen umfasst, die gemäß einer fortlaufenden Reihe angeordnet sind, wobei die Kronenstruktur zumindest eine Gürtelstruktur aufweist;
c) torodiales Formen der Karkassenstruktur, um sie, in zumindest einer Arbeitsstation (4) zum Formen und Fügen, an die Kronenstruktur zu fügen, für den in Verarbeitung befindlichen Reifen;
wobei der Transfer jeder der ersten Formtrommel (6) und der zweiten Formtrommel (7) mit der jeweiligen in Verarbeitung befindlichen Karkassenstruktur und Kronenstruktur von einer Arbeitsstation zur Anderen der jeweiligen Fertigungslinien (2, 3) zumindest einen Transferschritt d) von einer ersten Arbeitsstation zu einer zweiten Arbeitsstation, die in der fortlaufenden Reihe der Ersten nicht benachbart ist, aufweist, und
wobei jeder Transferschritt d) auf eine Art stattfindet, dass die erste Formtrommel und die zweite Formtrommel (7) in die erste und zweite Arbeitsstation verbracht werden, ohne in andere Arbeitsstationen verbracht zu werden.

2. Verfahren zur Fertigung von Rohreifen für Fahrzeugräder nach Anspruch 1, wobei die erste Formtrommel (6) mit der jeweiligen in Verarbeitung befindlichen Karkassenstruktur in der jeweiligen Fertigungslinie (2) von einer Arbeitsstation zur Anderen durch eine Bewegung im Raum transferiert wird, die zumindest eine von Null verschiedene Vektorkomponente aufweist.

3. Verfahren zur Fertigung von Rohreifen für Fahrzeugräder nach Anspruch 2, wobei die Bewegung des Schwerpunktes der ersten Formtrommel (6) drei von Null verschiedene Vektorkomponenten aufweist.

4. Verfahren zur Fertigung von Rohreifen für Fahrzeugräder nach Anspruch 1, wobei die zweite Formtrommel (7) mit der jeweiligen in Verarbeitung befindlichen Kronenstruktur in der jeweiligen Fertigungslinie (3) von einer Verarbeitungsstation zur Anderen durch eine Bewegung im Raum transferiert wird, die zumindest eine von Null verschiedene Vektorkomponente aufweist.

5. Verfahren zur Fertigung von Rohreifen für Fahrzeugräder nach Anspruch 4, wobei die Bewegung des Schwerpunktes der zweiten Formtrommel (7) drei von Null verschiedene Vektorkomponenten aufweist.

6. Verfahren zur Fertigung von Rohreifen für Fahrzeugräder nach einem der vorhergehenden Ansprüche, wobei die erste Formtrommel (6) und die zweite Formtrommel (7) von einer Arbeitsstation zur Anderen in den jeweiligen Fertigungslinien (2, 3) zumindest teilweise gleichzeitig transferiert werden.

7. Verfahren zur Fertigung von Rohreifen für Fahrzeugräder nach einem der vorhergehenden Ansprüche, wobei die erste Formtrommel (6) und die zweite Formtrommel (7) von einer Arbeitsstation zur Anderen der jeweiligen Fertigungslinien (2, 3) jeweils durch zumindest ein erstes Handhabungselement und zumindest ein zweites Handhabungselement transferiert werden.

8. Verfahren zur Fertigung von Rohreifen für Fahrzeugräder nach Anspruch 7, wobei das erste Handhabungselement zumindest einen ersten Roboterarm (36) umfasst.

9. Verfahren zur Fertigung von Rohreifen für Fahrzeugräder nach Anspruch 7, wobei das zweite Handhabungselement zumindest einen zweiten Roboterarm (38) umfasst.

10. Verfahren zur Fertigung von Rohreifen für Fahrzeugräder nach einem der vorhergehenden Ansprüche, wobei jede Karkassenstruktur mit der jeweiligen ersten Formtrommel (6) assoziiert ist, auf der sie bis zum Ende von Schritt c) des Formens und Fügens des in Verarbeitung befindlichen Reifens gefertigt wird.

11. Verfahren zur Fertigung von Rohreifen für Fahrzeugräder nach einem der vorhergehenden Ansprüche, wobei die Reifen die in der Karkassenstrukturfertigungslinie (2) und in der Kronenstrukturfertigungslinie (3) gleichzeitig verarbeitet werden, zumindest zwei unterschiedliche Modelle sind.

12. Verfahren zur Fertigung von Rohreifen für Fahrzeugräder nach einem der vorhergehenden Ansprüche, das vor Schritt a) des Fertigens der Karkassenstruktur, einen Schritt z) des lösbaren in-Eingriff-Bringens eines Paars von Unterstützungsringen mit der ersten Formtrommel (6) umfasst, wobei das Paar von Unterstützungsringen dafür geeignet ist, mit der ersten Formtrommel (6) bei der Fertigung der Karkassenstruktur zusammenzuwirken.

13. Verfahren zur Fertigung von Rohreifen für Fahrzeugräder nach einem der vorhergehenden Ansprüche, das die Schritte des Aufnehmens einer ersten Formtrommel (6) von einer Trommellagerungsarbeitsstation (10) und des Ablegens der ersten Formtrommel (6) in der Karkassenstrukturfertigungslinie (2) aufweist.

14. Verfahren zur Fertigung von Rohreifen für Fahrzeugräder nach einem der vorhergehenden Ansprüche, das nach dem Schritt c) des Formens und Fügens, den Schritt e) des Transferierens des geformten Rohreifens in eine Rohreifenlagerungsarbeitsstation (30) aufweist, der mit der Arbeitsstation zum Formen und Fügen (4) operativ assoziiert ist.

15. Verfahren zur Fertigung von Rohreifen für Fahrzeugräder nach einem der vorhergehenden Ansprüche, das weiterhin den Schritt i) des Einstellens der Dimensionen der ersten Formtrommel (6) und/oder der zweiten Formtrommel (7) aufweist.

16. Anlage (1) zur Fertigung von Rohreifen für Fahrzeugräder umfassend:
- zumindest eine Karkassenstrukturfertigungslinie (2) auf einer ersten Formtrommel (6), wobei die Karkassenstruktur zumindest eine Karkassenlage und ein Paar ringförmiger Verankerungsstrukturen umfasst, umfassend:
- mehrere Arbeitsstationen, die gemäß einer fortlaufenden Reihe angeordnet sind; und
- zumindest ein erstes Handhabungselement, das dafür geeignet ist, zumindest eine erste Bewegung auszuführen, in der es die erste Formtrommel (6) mit der jeweiligen in Verarbeitung befindlichen Karkassenstruktur von jeder ersten Arbeitsstation der fortlaufenden Reihe zu jeder anderen, dazu nicht benachbarten, zweiten Arbeitsstation der fortlaufenden Reihe transferiert, sodass die erste Formtrommel (6) in die erste und zweite Arbeitsstation verbracht wird, ohne während der zumindest einen ersten Bewegung in andere Arbeitsstationen verbracht zu werden;
- zumindest eine Kronenstrukturfertigungslinie (3) auf zumindest einer zweiten Formtrommel (7), wobei die Kronenstruktur zumindest eine Gürtelstruktur umfasst, umfassend:
- mehrere Arbeitsstationen, die gemäß einer fortlaufenden Reihe angeordnet sind; und
- zumindest ein zweites Handhabungselement, das dafür geeignet ist, zumindest eine erste Bewegung auszuführen, in der es die zweite Formtrommel (7) mit der jeweiligen in Verarbeitung befindlichen Kronenstruktur von jeder ersten Arbeitsstation der fortlaufenden Reihe zu jeder anderen, dazu nicht benachbarten, zweiten Arbeitsstation der fortlaufenden Reihe transferiert, sodass die zweite Formtrommel (7) in die erste und zweite Arbeitsstation eingeführt wird, ohne während der zumindest einen ersten Bewegung in andere Arbeitsstationen verbracht zu werden;
- zumindest eine Arbeitsstation (4) zum Formen und Fügen für den in Verarbeitung befindlichen Reifen, die dazu geeignet ist, die Karkassenstruktur zu formen und sie an die Kronenstruktur des in Verarbeitung befindlichen Reifens zu fügen.

17. Anlage (1) zur Fertigung von Rohreifen für Fahrzeugräder nach Anspruch 16, wobei das zumindest eine erste Handhabungselement mit Elementen zum Transferieren der ersten Formtrommel (6), mit der jeweiligen in Verarbeitung befindlichen Karkassenstruktur, von einer Arbeitsstation zur Anderen in der jeweiligen Karkassenstrukturfertigungslinie (2) durch eine Bewegung des Schwerpunktes der ersten Formtrommel (6) im Raum, die zumindest eine von Null verschiedene Vektorkomponente aufweist, versehen ist.

18. Anlage (1) zur Fertigung von Rohreifen für Fahrzeugräder nach Anspruch 17, wobei die Bewegung des Schwerpunktes der ersten Formtrommel (6) drei von Null verschiedene Vektorkomponenten im Raum aufweist.

19. Anlage (1) zur Fertigung von Rohreifen für Fahrzeugräder nach Anspruch 16, wobei das zumindest eine zweite Handhabungselement mit Elementen zum Transferieren der jeweiligen zweiten Formtrommel (7), mit der jeweiligen in Verarbeitung befindlichen Kronenstruktur, von einer Arbeitsstation zur Anderen in der jeweiligen Kronenstrukturfertigungslinie (3) durch eine Bewegung des Schwerpunktes der zweiten Formtrommel (7) im Raum, die zumindest eine von Null verschiedene Vektorkomponente aufweist, versehen ist.

20. Anlage (1) zur Fertigung von Rohreifen für Fahrzeugräder nach Anspruch 19, wobei die Bewegung des Schwerpunktes der zweiten Formtrommel (7) drei von null verschiedene Vektorkomponenten im Raum aufweist.

21. Anlage (1) zur Fertigung von Rohreifen für Fahrzeugräder nach einem der Ansprüche 16 - 20, wobei das erste Handhabungselement zumindest einen ersten Roboterarm (36) aufweist.

22. Anlage (1) zur Fertigung von Rohreifen für Fahrzeugräder nach einem der Ansprüche 16 - 20, wobei das zweite Handhabungselement zumindest einen zweiten Roboterarm (38) aufweist.

23. Anlage (1) zur Fertigung von Rohreifen für Fahrzeugräder nach einem der Ansprüche 16 - 22, wobei die Arbeitsstation (4) zum Formen und Fügen mit Elementen zum Formen versehen ist, die mit der ersten Formtrommel (6) in Eingriff gebracht werden können, und die dafür geeignet sind, das Formen der Karkassenstruktur auf der ersten Formtrommel (6) auszuführen.

24. Anlage (1) zur Fertigung von Rohreifen für Fahrzeugräder nach einem der Ansprüche 16 - 23, die Elemente zum Transferieren der Rohreifen von der Arbeitsstation (4) zum Formen und Fügen zur Rohreifenlagerungsarbeitsstation (30) umfasst.

25. Anlage (1) zur Fertigung von Rohreifen für Fahrzeugräder nach Anspruch 24, wobei die Elemente zum Transferieren der Rohreifen von der Arbeitsstation (4) zum Formen und Fügen zur Rohreifenlagerungsarbeitsstation (30) einen Roboterarm (29) umfassen.

## Revendications

1. Procédé de fabrication de pneus verts pour roues de véhicule comprenant les étapes de :
a) fabriquer une structure de carcasse sur un premier tambour de formage (6) dans au moins une ligne de fabrication de structure de carcasse (2) comprenant une pluralité de stations de travail agencées selon une série séquentielle, ladite structure de carcasse comprenant au moins une nappe de carcasse et une paire de structures d'ancrage annulaire ;
b) fabriquer une structure de couronne sur au moins un deuxième tambour de formage (7) dans au moins une ligne de fabrication de structure de couronne (3) comprenant une pluralité de stations de travail agencées selon une série séquentielle, ladite structure de couronne comprenant au moins une structure de ceinture ;
c) mettre en forme toro'idale ladite structure de carcasse en l'assemblant à ladite structure de couronne dans au moins une station de travail de mise en forme et d'assemblage (4) pour le pneu en cours de fabrication ;
procédé dans lequel les transferts de chacun desdits premier tambour de formage (6) et deuxième tambour de formage (7), avec la structure de carcasse et la structure de ceinture respectives en cours de traitement, d'une station de travail à l'autre des lignes de fabrication respectives (2, 3) comprennent au moins une étape d) de transfert depuis une première station de travail vers une deuxième station de travail non adjacente à la première dans ladite série séquentielle, et
procédé dans lequel chaque étape d) de transfert a lieu d'une telle manière que le premier tambour de formage et le deuxième tambour de formage (7) passent dans lesdites première et deuxième stations de travail sans passer dans d'autres stations de travail.

2. Procédé de fabrication de pneus verts pour roues de véhicule selon la revendication 1, dans lequel ledit premier tambour de formage (6) avec la structure de carcasse respective en cours de traitement est transféré depuis une première station de travail à l'autre dans la ligne de fabrication respective (2) par un mouvement de son centre de gravité dans l'espace ayant au moins une composante vectorielle non nulle.

3. Procédé de fabrication de pneus verts pour roues de véhicule selon la revendication 2, dans lequel ledit mouvement du centre de gravité dudit premier tambour de formage (6) a trois composantes vectorielles non nulles.

4. Procédé de fabrication de pneus verts pour roues de véhicule selon la revendication 1, dans lequel ledit deuxième tambour de formage (7) avec la structure de ceinture respective en cours de fabrication est transféré depuis une station de travail vers l'autre dans la ligne de fabrication respective (3) par mouvement de son centre de gravité dans l'espace ayant au moins une composante vectorielle non nulle.

5. Procédé de fabrication de pneus verts pour roues de véhicule selon la revendication 4, dans lequel ledit mouvement du centre de gravité dudit deuxième tambour de formage (7) a trois composantes vectorielles non nulles.

6. Procédé de fabrication de pneus verts pour roues de véhicule selon l'une quelconque des revendications précédentes, dans lequel ledit premier tambour de formage (6) et ledit deuxième tambour de formage (7) sont transférés au moins en partie simultanément depuis une station de travail vers l'autre des lignes de fabrication respectives (2, 3).

7. Procédé de fabrication de pneus verts pour roues de véhicule selon l'une quelconque des revendications précédentes, dans lequel ledit premier tambour de formage (6) et ledit deuxième tambour de formage (7) sont transférés depuis une station de travail vers l'autre des lignes de fabrication respectives (2, 3) respectivement par au moins un premier dispositif de manipulation et au moins un deuxième dispositif de manipulation.

8. Procédé de fabrication de pneus verts pour roues de véhicule selon la revendication 7, dans lequel ledit premier dispositif de manipulation comprend au moins un premier bras robotisé (36).

9. Procédé de fabrication de pneus vert pour roues de véhicule selon la revendication 7, dans lequel ledit deuxième dispositif de manipulation comprend au moins un deuxième bras robotisé (38).

10. Procédé de fabrication de pneus verts pour roues de véhicule selon l'une quelconque des revendications précédentes, dans lequel chaque structure de carcasse est associée avec le premier tambour de formage (6) respectif sur lequel elle est fabriquée à la fin de l'étape c) de mise en forme et assemblage du pneu en cours de traitement.

11. Procédé de fabrication de pneus verts pour roues de véhicule selon l'une quelconque des revendications précédentes, dans lequel les pneus en cours de fabrication simultanément dans ladite ligne de fabrication de structure de carcasse (2) et dans ladite ligne de fabrication de structure de couronne (3) sont au moins de deux modèles différents.

12. Procédé de fabrication de pneus verts pour roues de véhicule selon l'une quelconque des revendications précédentes comprenant, préalablement à l'étape a) de fabrication de la structure de carcasse, une étape z) d'association de manière amovible d'une paire d'anneaux de support audit premier tambour de formage (6), ladite paire d'anneaux de support étant appropriée pour coopérer avec ledit premier tambour de formage (6) dans la fabrication de ladite structure de carcasse.

13. Procédé de fabrication de pneus verts pour roues de véhicule selon l'une quelconque des revendications précédentes, comprenant les étapes d'enlever un premier tambour de formage (6) d'une station de travail de stockage de tambours (10) et de placer ledit premier tambour de formage (6) dans ladite ligne de fabrication de structure de carcasse (2).

14. Procédé de fabrication de pneus verts pour roues de véhicule selon l'une quelconque des revendications précédentes, comprenant ultérieurement à l'étape de mise en forme et d'assemblage c), l'étape e) de transférer le pneu vert mis en forme dans une station de travail de stockage de pneus verts (30) fonctionnellement associée avec la station de travail de mise en forme et d'assemblage (4).

15. Procédé de fabrication de pneus verts pour roues de véhicule selon l'une quelconque des revendications précédentes, comprenant en outre l'étape i) de réglage des dimensions d'au moins l'un des premier tambour de formage (6) et deuxième tambour de formage (7).

16. Installation (1) de fabrication de pneus verts pour roues de véhicule comprenant :
- au moins une ligne de fabrication de structure de carcasse (2) sur un premier tambour de formage (6), ladite structure de carcasse comprenant au moins une nappe de carcasse et une paire de structures d'ancrage annulaire, comprenant :
- une pluralité de stations de travail agencées selon une série séquentielle ; et
- au moins un premier dispositif de manipulation approprié pour réaliser au moins un premier mouvement dans lequel il transfère le premier tambour de formage (6) avec la structure de carcasse relative en cours de fabrication depuis n'importe quelle première station de travail de ladite série séquentielle à n'importe quelle autre deuxième station de travail de ladite série séquentielle non adjacente à celle ci, de sorte que le premier tambour de formage (6) passe dans lesdites première et deuxième stations de travail sans passer dans d'autres stations de travail pendant ledit au moins un premier mouvement ;
- au moins une ligne de fabrication de structure de couronne (3) sur au moins un deuxième tambour de formage (7), ladite structure de couronne comprenant au moins une structure de ceinture, comprenant :
- une pluralité de stations de travail agencées selon une série séquentielle ; et
- au moins un deuxième dispositif de manipulation approprié pour réaliser au moins un premier mouvement dans lequel il transfère le deuxième tambour de formage (7) avec la structure de couronne relative en cours de traitement depuis n'importe quelle première station de travail de ladite série séquentielle à n'importe quelle autre deuxième station de travail de ladite série séquentielle non adjacente à celle ci, de sorte que le deuxième tambour de formage (7) passe dans lesdites première et deuxième stations de travail sans passer dans d'autres stations de travail pendant ledit au moins un premier mouvement ;
- au moins une station de travail de mise en forme et d'assemblage (4) pour le pneu en cours de traitement, appropriée pour mettre en forme ladite structure de carcasse et l'assembler à ladite structure de couronne du pneu en cours de fabrication.

17. Installation (1) de fabrication de pneus verts pour roues de véhicule selon la revendication 16, dans lequel ledit au moins un dispositif de manipulation est prévu avec des dispositifs pour transférer ledit premier tambour de formage (6) avec la structure de carcasse respective en cours de traitement est transféré depuis une première station de travail vers l'autre dans la ligne de fabrication respective (2) par un mouvement du centre de gravité dudit premier tambour de formage (6) dans l'espace ayant au moins une composante vectorielle non nulle.

18. Installation (1) de fabrication de pneus verts pour roues de véhicule selon la revendication 17, dans lequel ledit mouvement du centre de gravité dudit premier tambour de formage (6) a trois composantes vectorielles non nulles dans l'espace.

19. Installation (1) de fabrication de pneus verts pour roues de véhicule selon la revendication 16, dans lequel ledit au moins un deuxième dispositif de manipulation est prévu avec des dispositifs pour transférer ledit deuxième tambour de formage (7) avec la structure de ceinture respective en cours de traitement est transféré depuis une station de travail vers l'autre dans la ligne de fabrication de structure de couronne respective (3) par un mouvement du centre de gravité dudit second tambour de formage (7) dans l'espace ayant au moins une composante vectorielle non nulle.

20. Installation (1) de fabrication de pneus verts pour roues de véhicule selon la revendication 19, dans lequel ledit mouvement du centre de gravité dudit deuxième tambour de formage (7) a trois composantes vectorielles non nulles dans l'espace.

21. Installation (1) de fabrication de pneus verts pour roues de véhicule selon l'une quelconque des revendications 16 à 20, dans lequel ledit premier dispositif de manipulation comprend au moins un premier bras robotisé (36).

22. Installation (1) de fabrication de pneus vert pour roues de véhicule selon l'une quelconque des revendications 16 à 20, dans lequel ledit deuxième dispositif de manipulation comprend au moins un deuxième bras robotisé (38).

23. Installation (1) de fabrication de pneus verts pour roues de véhicule selon l'une quelconque des revendications 16 à 22, dans lequel ladite station de travail de mise en forme et d'assemblage (4) est prévue avec des dispositifs de mise en forme, associables avec ledit premier tambour de formage (6), appropriés pour réaliser la mise en forme de la structure de carcasse sur ledit premier tambour de formage (6).

24. Installation (1) de fabrication de pneus verts pour roues de véhicule selon l'une quelconque des revendications 16 à 23, comprenant des dispositifs pour transférer le pneu vert depuis la station de travail de mise en forme et d'assemblage (4) vers la station de stockage de pneus verts (30).

25. Installation (1) de fabrication de pneus verts pour roues de véhicule selon la revendication 24, dans lequel lesdits dispositifs pour transférer le pneu vert depuis la station de travail de mise en forme et d'assemblage (4) vers la station de travail de stockage de pneus verts (30) comprend un bras robotisé (29).
